# FASCICULE DE BREVET EUROPEEN

(11) **EP 3 450 669 B1**
(45) Date de publication et mention de la délivrance du brevet: **20.11.2019**
(21) Numéro de dépôt: 18191383.1
(22) Date de dépôt: 29.08.2018
(51) Int. Cl.: E05G 1/08, G06Q 10/08, G07C 9/00

(54) **COFFRE MODULAIRE, ET PROCÉDÉ DE VERROUILLAGE/ DÉVEROUILLAGE D'AU MOINS DEUX OUVRANTS D'UN TEL COFFRE**
MODULARES GEHÄUSE UND VERFAHREN ZUM VER-/ENTRIEGELN VON MINDESTENS ZWEI ÖFFNUNGSELEMENTEN EINES SOLCHEN GEHÄUSES
MODULAR HOUSING, AND METHOD FOR LOCKING/UNLOCKING AT LEAST TWO OPENINGS IN SUCH A HOUSING

(30) Priorité: 30.08.2017 FR 1758014
(43) Date de publication de la demande: 06.03.2019
(73) Titulaire: LA POSTE, 75015 Paris (FR)
(72) Inventeur: FABRE, Jean-Paul, 75014 PARIS (FR)
(74) Mandataire: Novagraaf Technologies

(56) Documents cités:
- WO-A1-2014/078860
- US-A1- 2008 061 924
- US-A1- 2009 187 274

## Description

### DOMAINE TECHNIQUE DE L'INVENTION

La présente invention concerne de manière générale le domaine des coffres de consigne, et plus précisément des coffres de consigne comportant des compartiments de réception d'objets, ainsi que l'accès sécurisé aux compartiments des coffres.

### ETAT DE LA TECHNIQUE ANTERIEURE

Il est connu un coffre comportant des compartiments de réception d'objets et des ouvrants formant accès aux compartiments depuis l'extérieur. Le coffre comporte en outre des dispositifs de verrouillage et déverrouillage de chaque ouvrant. Les dispositifs de déverrouillage comprennent notamment des moyens d'acquisition de données permettant par exemple la saisie d'un code alphanumérique par un utilisateur pour provoquer le verrouillage ou le déverrouillage de chaque ouvrant. La publication US 2008/0061924 A1 décrit un coffre selon la préambule de la revendication 1.

Une problématique rencontrée dans de tels dispositifs, outre l'aspect contraignant de l'adaptation de la taille des compartiments à la taille des objets à recevoir, est la saisie manuelle des codes alphanumérique mentionnés.

### EXPOSE DE L'INVENTION

L'invention décrite par la suite vise à remédier à tout ou partie des inconvénients de l'état de la technique et notamment à proposer un coffre modulaire permettant d'adapter l'espace de réception des objets en fonction de leur taille, en séparant ou en réunissant les espaces intérieurs des compartiments, en sécurisant l'accès aux compartiments à partir d'une ou plusieurs clef(s) numérique(s) et, si plusieurs compartiments sont réunis, en gérant le verrouillage ou déverrouillage coordonné des ouvrants formant accès aux compartiments réunis.

A cette fin, l'invention propose un coffre comprenant :au moins deux compartiments définissant chacun un espace intérieur de réception d'un objet ; au moins un séparateur de compartiments agencé entre deux compartiments et pouvant être positionné dans une première position, de sorte à séparer les espaces intérieurs respectifs définis par ces compartiments, ou dans une deuxième position, de sorte à réunir les espaces intérieurs respectifs définis par ces compartiments; au moins deux ouvrants, chaque ouvrant formant accès à un compartiment distinct depuis l'extérieur du coffre, chaque ouvrant comprenant une serrure électronique et étant apte à fermer un desdits espaces intérieurs; et un module de commande relié aux serrures électroniques via une liaison de données, les serrures électroniques comprenant des moyens moteurs aptes à verrouiller et déverrouiller l'ouvrant suivant la valeur d'une consigne reçue par les serrures électroniques via la première liaison de données, le module de commande comprenant des moyens de réception d'un signal comprenant au moins une clef numérique, dite clef numérique reçue ; et un composant électronique de reconnaissance permettant d'authentifier ladite au moins une clef numérique reçue, les moyens de réception étant propre à transmettre le signal au composant électronique de reconnaissance, l'authentification de ladite au moins une clef numérique reçue par le composant électronique de reconnaissance déclenchant la génération d'un signal de consigne pour le verrouillage ou le déverrouillage de l'ouvrant. Le module de commande comprend en outre des moyens de détermination si l'au moins un séparateur de compartiments est positionné dans la première ou dans la deuxième position, et des moyens de transmission du résultat de cette détermination au composant électronique de reconnaissance ; le composant électronique de reconnaissance est apte, lorsqu'il est déterminé que ledit au moins un séparateur de compartiments est positionné dans la deuxième position, à transmettre, suite à l'authentification de ladite au moins une clef numérique, ledit signal de consigne à destination de toutes les serrures électroniques associées aux ouvrants qui forment accès aux compartiments agencés de part et d'autre dudit au moins un séparateur de compartiments, pour le verrouillage ou le déverrouillage desdits ouvrants.

Ceci permet, en cas de mutualisation d'au moins deux compartiments du coffre, de faciliter l'accès à l'intérieur du compartiment résultant, via l'ouverture simultanée de tous les ouvrants qui forment accès à ce compartiment, tout en permettant d'assurer une gestion simple et fiable des clefs numériques générées.

L'invention peut présenter une ou plusieurs des caractéristiques suivantes :
Dans un mode de réalisation, le coffre comprend en outre des moyens moteurs aptes à positionner ledit au moins un séparateur de compartiments dans la première ou dans la deuxième position, suivant la valeur d'au moins un signal de commande reçu, le module de commande apte à recevoir un ordre de positionnement de l'au moins un séparateur de compartiments, le module de commande étant propre à générer ledit au moins un signal de commande en fonction de l'ordre de positionnement reçu et à transmettre aux moyens moteurs ledit au moins un signal de commande pour le positionnement dudit au moins un séparateur de compartiments dans la première ou dans la deuxième position.

Dans un mode de réalisation, le coffre comprend en outre au moins un détecteur apte à détecter si ledit au moins un séparateur de compartiments se trouve dans la première ou dans la deuxième position, ledit au moins un détecteur étant connecté par une connexion au module de commande, et apte à transmettre au module de commande des informations représentatives du positionnement dudit au moins un séparateur de compartiments.

Dans un mode de réalisation du coffre, ledit au moins un séparateur de compartiments peut être positionné manuellement par un utilisateur muni d'un dispositif de communication permettant une saisie manuelle des informations représentatives du positionnement dudit au moins un séparateur de compartiments, le dispositif de communication étant apte à transmettre ces informations au module de commande.

Dans un mode de réalisation du coffre, les serrures électroniques comprennent des moyens de détection d'une fermeture de l'ouvrant et des moyens d'émission d'un signal de détection de fermeture sur la liaison de données et le module de commande comprend en outre des moyens de génération de clefs numériques propres à générer une clef numérique unique suite à la détection de fermeture de l'ouvrant, des moyens de transmission de la clef numérique unique générée au composant électronique de reconnaissance, le composant électronique étant propre à authentifier la clef numérique reçue par comparaison avec la clef numérique générée et des moyens d'émission d'un signal comportant la clef numérique unique générée.

Dans un autre mode de réalisation du coffre, les moyens de génération de clefs numériques sont aptes, lorsque ledit au moins un séparateur de compartiments est positionné dans la deuxième position, à générer une clef numérique unique pour toutes les serrures électroniques associées aux ouvrants qui forment accès aux compartiments agencés de part et d'autre dudit au moins un séparateur de compartiments, la clef numérique unique étant générée seulement lorsque la fermeture de tous les ouvrants qui forment accès aux compartiments agencés de part et d'autre dudit au moins un séparateur de compartiments est détectée.

Dans un mode de réalisation préférentiel, le coffre comprend en outre un module de stockage des clefs numériques, au moins une clef numérique étant associée à chaque serrure électronique et des moyens de transmission de ladite au moins une clef numérique unique stockée au composant électronique de reconnaissance, le composant électronique étant propre à authentifier ladite au moins une clef numérique reçue par comparaison avec ladite au moins une clef numérique stockée.

Dans un mode de réalisation du coffre, une information d'horodatage est associée à la clef numérique unique, et le composant électronique n'est propre à authentifier la clef numérique reçue par comparaison avec la clef numérique unique générée que pendant une durée prédéterminée.

Un autre objet de l'invention est un véhicule comprenant un coffre tel que précédemment décrit.

Un autre objet de l'invention est un meuble comprenant un coffre tel que précédemment décrit.

Selon un autre aspect, l'invention a également pour objet un procédé de verrouillage ou déverrouillage d'au moins deux ouvrants d'un coffre tel que précédemment décrit. Plus précisément, le procédé de verrouillage et déverrouillage comprend :
- une étape de réception par les moyens de réception du module de commande d'un signal comprenant au moins une clef numérique, dite clef numérique reçue ;
- une étape d'authentification de ladite au moins une clef numérique reçue, par le composant électronique de reconnaissance ;
- une étape de détermination, par le module de commande, si l'au moins un séparateur de compartiments est positionné dans la première ou dans la deuxième position,
- une étape de transmission, par le module de commande, du résultat de cette détermination au composant électronique de reconnaissance et, lorsqu'il est déterminé que ledit au moins un séparateur de compartiments est positionné dans la deuxième position,
- une étape de génération par le composant électronique de reconnaissance, suite à l'authentification de ladite au moins une clef numérique, d'un signal de consigne à destination de toutes les serrures électroniques associées aux ouvrants qui forment accès aux compartiments agencés de part et d'autre dudit au moins un séparateur de compartiments (16, 16A, 16B), pour le verrouillage ou le déverrouillage desdits ouvrants.

### BREVE DESCRIPTION DES FIGURES

D'autres caractéristiques et avantages de l'invention ressortiront à la lecture de la description qui suit, donnée uniquement à titre d'exemple, et faite en référence aux figures 1 à 7.
La figure 1 est une vue en perspective d'un coffre selon un mode de réalisation de l'invention.
La figure 2 est une représentation schématique des éléments appartenant au coffre de la figure 1.
La figure 3 est une vue analogue à celle de la figure 1, dans laquelle les séparateurs de compartiments sont dans une première position, permettant de séparer les espaces intérieurs des compartiments.
La figure 4 est une vue analogue à celle de la figure 1, dans laquelle les séparateurs de compartiments sont dans une deuxième position, permettant de réunir les espaces intérieurs des compartiments.
La figure 5 est une vue analogue à celle de la figure 1, dans laquelle un séparateur de compartiments est dans la première position permettant de séparer les espaces intérieurs des compartiments, et un séparateur de compartiments est dans la deuxième position permettant de réunir les espaces intérieurs des compartiments.
La figure 6 représente un meuble comprenant des coffres selon un mode de réalisation de l'invention.
La figure 7 représente un véhicule sans pilote comprenant un coffre selon un mode de réalisation de l'invention.

### DESCRIPTION DETAILLEE D'UN MODE DE REALISATION

Dans la suite de la description, on entend par « ouvrant » tout élément mécanique mobile entre une position de fermeture interdisant l'accès à l'intérieur d'un compartiment d'un coffre, et une position d'ouverture permettant l'accès à l'intérieur du compartiment.

On entend également par « dispositif de communication » tout dispositif électronique nomade apte à transmettre et à recevoir des données via un réseau ou une portion de réseau sans fil, tel que par exemple un ordinateur portable, un téléphone, un smartphone, ou encore une tablette numérique, sans que cette liste ne soit exhaustive.

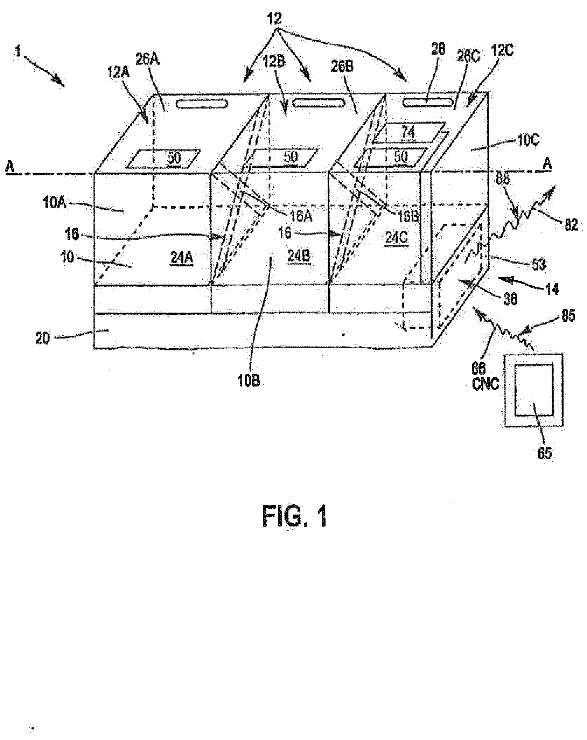

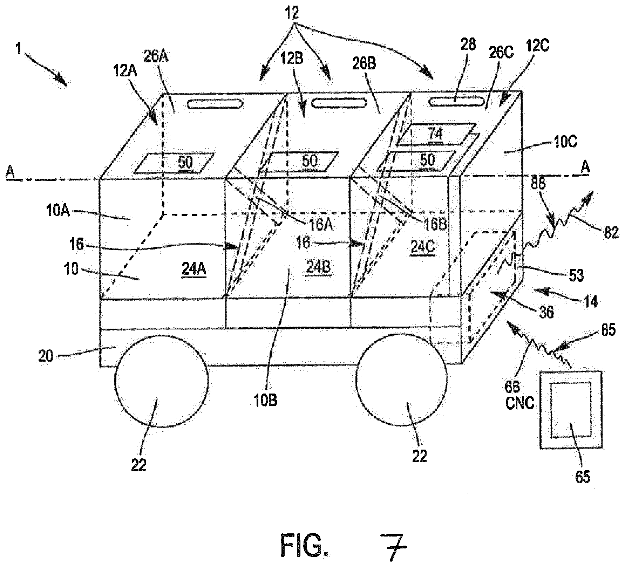

En référence aux figures 1 à 7, un coffre 1 comprend au moins deux compartiments 10, 10A, 10B, 10C, chacun muni d'un ouvrants 12, 12A, 12B, 12C et un dispositif 14 permettant le verrouillage et le déverrouillage de chaque ouvrant 12, 12A, 12B, 12C, dit dispositif de déverrouillage.

Chaque compartiment 10, 10A, 10B, 10C définit un espace intérieur 24A, 24B, 24C de réception d'un objet. Un tel objet, qui n'est pas représenté sur les figures pour des raisons de clarté, est par exemple destiné à être distribué à un utilisateur final, ou envoyé par cet utilisateur, grâce à un service de collecte et distribution assuré par l'opérateur du coffre 1.

Chaque ouvrant 12A, 12B, 12C forme accès à un des compartiments 10A, 10B, 10C depuis l'extérieur du coffre 1, et est apte à fermer l'espace intérieur 24A, 24B, 24C associé à ce compartiment. Dans l'exemple de réalisation particulier des figures 1 à 5, chaque ouvrant 12A, 12B, 12C est formé d'une porte supérieure 26A, 26B, 26C pivotante autour d'un axe A-A, une telle porte formant accès à un espace intérieur 24A, 24B, 24C.

Alternativement, les ouvrants 12A, 12B, 12C peuvent être formés par des portes latérales, disposées verticalement. Cet agencement (non représente) permet d'empiler des coffres modulaires, tout en gardant la possibilité d'accéder à l'espace intérieur des compartiments 10A, 10B, 10C.

Chaque porte 26A, 26B, 26C peut être munie d'une poignée de préhension 28 facilitant son ouverture par un utilisateur.

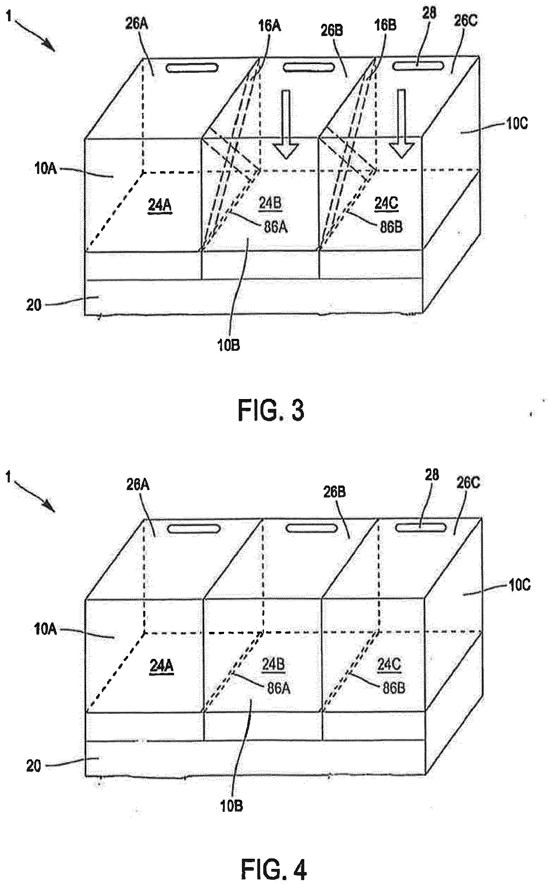

Le coffre 1 comprend au moins un séparateur de compartiments 16, 16A, 16B, pouvant être positionné dans une première position, illustrée en figure 3, de sorte à séparer les espaces intérieurs respectifs 24A, 24B, 24C définis par ces compartiments 10, 10A, 10B, 10C, ou dans une deuxième position, illustrée en figure 4, de sorte à réunir les espaces intérieurs respectifs 24A, 24B, 24C définis par ces compartiments 10, 10A, 10B, 10C.

Dans un mode de réalisation, le coffre comporte aussi des moyens moteurs 18A, 18B, reliés au séparateurs 16A, 16B, et aptes à positionner ces séparateurs dans la première position ou dans la deuxième position. Dans l'exemple illustré, chaque séparateur de compartiments16A, 16B est escamotable, mobile entre une première position non-escamotée, représentée sur la figure 3, et une deuxième position escamotée, représentée sur la figure 4. Le premier séparateur 16A sépare, en position non-escamotée, les espaces intérieurs 24A, 24B définis par le premier et le deuxième compartiments 10A, 10B. Le second séparateur 16B sépare, en position non-escamotée, les espaces intérieurs 24B, 24C définis par le deuxième compartiment 10B et par un troisième compartiment 10C.

Chaque séparateur escamotable 16A, 16B, est apte à s'escamoter dans un châssis 20, à travers une fente 86A, 86B prévue à cet effet dans le châssis 20.

Les moyens moteurs 18 de chaque séparateur 16A, 16B de compartiments sont aptes à escamoter et à remettre en place le séparateur 16A, 16B suivant la valeur d'un signal de commande 84 A, 84B. Les moyens moteurs 18 de chaque séparateur 16A, 16B sont par exemple formés d'un micro-moteur permettant de déplacer le séparateur entre sa première position non-escamotée et sa deuxième position escamotée, et réciproquement, selon la valeur du signal de commande 84 A, 84B reçu.

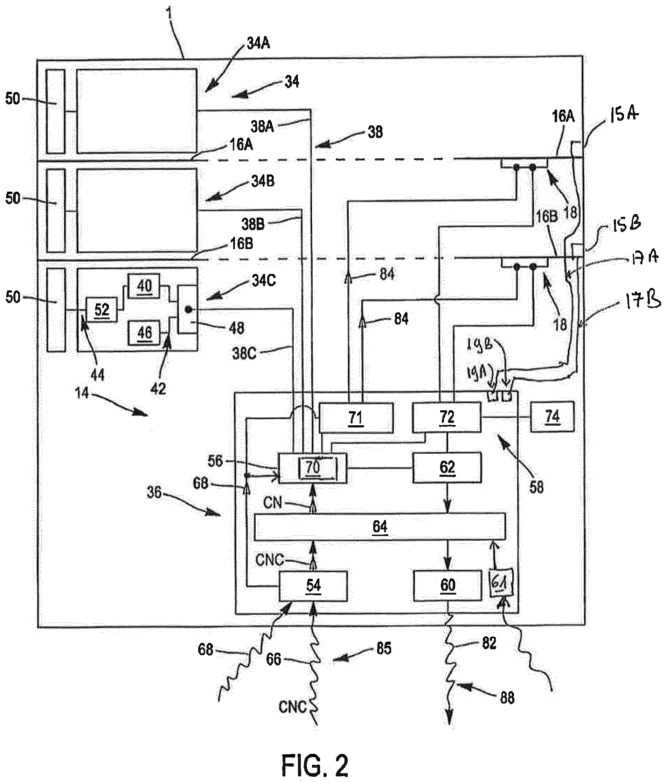

Un exemple de réalisation du dispositif de déverrouillage 14 va maintenant être décrit en référence aux figures 1 et 2.

Le dispositif de déverrouillage 14 comprend au moins deux serrures électroniques 34A, 34B, 34C et un module de commande 36 relié à chaque serrure électronique via une liaison de données 38A, 38B, 38C. Chaque serrure électronique 34A, 34B, 34C est apte à verrouiller et déverrouiller un des ouvrants 12A, 12B, 12C.

Le module de commande 36 est par exemple agencé sous un compartiment 10C, dans un logement 53 aménagé à cet effet au sein du châssis 20, comme illustré sur la figure 1.

Dans cet exemple de réalisation, chaque serrure électronique 34A, 34B, 34C comprend des moyens moteurs 40 et des moyens 42 de détection d'une fermeture de l'ouvrant 12A, 12B, 12C associé, comme représenté sur la figure 2. Les moyens moteurs 40 sont aptes à verrouiller ou déverrouiller l'ouvrant 12A, 12B, 12C, suivant la valeur d'une consigne reçue via la liaison de données 38A, 38B, 38C; dans certains modes de réalisation, les moyens moteurs 40 sont également aptes à verrouiller l'ouvrant 12A, 12B, 12C, lors de la détection de la fermeture de cet ouvrant par les moyens de détection 42.

Dans certains modes de réalisation, les moyens de détection 42 sont aptes à émettre un signal de détection de la fermeture de l'ouvrant 12A, 12B, 12C associé à la serrure, sur la liaison de données 38A, 38B, 38C associée. Dans l'exemple de réalisation de la figure 2, les moyens de détection 42 comprennent un capteur de mouvement 46 apte à détecter une fermeture de l'ouvrant 12A, 12B, 12C, et un émetteur-récepteur de données 48 relié au capteur de mouvement 46 et à la liaison de données 38A, 38B, 38C associée. L'émetteur-récepteur 48 est connecté en outre aux moyens moteurs 40.

Le module de commande 36 comprend un capteur 54 de signaux comportant par exemple un récepteur de radiofréquences propre à recevoir un signal de fréquence pouvant être utilisée pour les communications sur des réseaux de télécommunications, par exemple de type LTE, Wi-FI, Bluetooth, BLE (Bluetooth Low Energy), NFC (Near Field Technology), ou Zigbee. Un tel capteur peut établir dans certains modes de réalisation des communications bidirectionnelles avec un dispositif de communication 65, 65', d'un utilisateur.

Dns certains modes de réalisation, le module de commande 36 comprend en outre des moyens 60 d'émission de signaux, et des moyens 61 de réception de signaux, pour une communication monodirectionnelle ou bidirectionnelle avec un serveur de stockage de données, par exemple via un réseau d'un opérateur de télécommunication et/ou via un réseau privé de l'opérateur du coffre 1.

Le module de commande 36 comprend en outre un composant électronique 56, relié au capteur 54 et à chaque liaison de données 38A, 38B, 38C, et des moyens 62 de génération de clefs numériques, reliés au composant électronique 56 et aux moyens d'émission 60. De préférence, le module de commande 36 comprend également un composant 64 de codage/décodage de données.

Dans un mode de réalisation particulier, le module de commande 36 comprend également une unité 71 de pilotage des moyens moteurs 18 des séparateurs escamotables 16A, 16B, reliée à ces moyens moteurs 18.

Le module de commande comprend également des moyens d'alimentation électrique, par exemple un élément de stockage d'énergie électrique 72 et un élément 74 de conversion d'énergie relié à l'élément de stockage d'énergie électrique 72.

Le capteur 54 est propre à recevoir un signal 66 comprenant une clef numérique CN, CNC, émis par un dispositif de communication 65 disposé à proximité du module de commande 36. Le capteur 54 est apte à transmettre ce signal 66 au composant électronique 56.

Le composant électronique 56 est un composant électronique de reconnaissance permettant d'authentifier une clef numérique CN reçue via le signal 66. Le composant électronique 56 est propre, lorsqu'il authentifie la clef numérique reçue CN, à générer un signal de consigne d'activation ou de désactivation des moyens moteurs 40, pour le verrouillage ou le déverrouillage des ouvrants 12A, 12B, 12C, et à émettre ce signal sur la liaison de données 38A, 38B, 38C correspondante.

Dans un mode de réalisation particulier, les moyens 62 de génération de clefs numériques sont propres à générer une clef numérique unique à chaque fermeture d'au moins un des ouvrants 12A, 12B, 12C, les moyens d'émission 60 étant propres à émettre un signal 82 comportant la clef numérique générée. Plus précisément, les moyens de génération 62 sont propres à générer une clef numérique unique suite à la réception par le composant électronique 56 d'au moins un signal de détection de fermeture d'un ouvrant 12A, 12B, 12C. Les moyens de génération 62 sont également propres à transmettre chaque clef numérique générée au composant électronique 56, pour stockage dans sa mémoire, permettant ainsi une authentification ultérieure d'une clef numérique CN reçue par comparaison avec la clef numérique générée. Plus précisément, le composant électronique 56 n'est propre à authentifier une clef numérique CN reçue que par comparaison avec la dernière clef numérique générée lors de la fermeture d'au moins un des ouvrants 12A, 12B, 12C.

De préférence, les moyens 62 de génération de clefs numériques sont propres à générer une clef numérique unique suite à la réception par le module de commande 36 d'un ordre de génération de clefs numériques. Cet ordre peut être reçu via le capteur 54, par exemple dans le cas d'émission de l'ordre par un dispositif de communication 65 d'un agent autorisé de l'opérateur du coffre1. Les signaux utilisés seront dans ce cas de signaux de type Bluetooth, BLE (Bluetooth Low Energie), ou NFC.

En variante, l'ordre de génération de clefs numériques peut être reçu par le module de commande 36 par l'intermédiaire des moyens de réception 61, via le réseau privé de l'opérateur du coffre 1, par exemple depuis le serveur de stockage de données de l'opérateur.

Dans les deux cas, le module de commande 36 est propre à envoyer vers le serveur de stockage de données de l'opérateur un signal 82 comportant la ou les clef(s) numérique(s) générée, soit par l'intermédiaire des moyens d'émission 60, soit par l'intermédiaire du dispositif de communication 65 d'un agent autorisé.

Selon un mode de réalisation de l'invention, le composant électronique 56 comporte dans sa mémoire des clefs numériques enregistrées lors de la fabrication du coffre. Ces clefs sont générées par des moyens spécialisés. Ensuite, l'ensemble des clefs et des identifiants des serrures associées à ces clefs sont envoyés, par l'intermédiaire des moyens sécurisés, au serveur de stockage de données de l'opérateur du coffre 1. Les clefs générées correspondant aux serrures 34, 34A, 34B, 34C d'un coffre 1 conforme à ce mode de réalisation, sont enregistrées dans la mémoire du composant électronique de reconnaissance 56.

De préférence, le processeur du composant électronique 56 est propre à remplacer dans la mémoire du composant électronique 56 une éventuelle clef numérique déjà stockée par une clef numérique nouvellement reçue par l'intermédiaire des moyens de réception 54, 61, ou nouvellement générée, suite à la détection de la fermeture d'au moins un des ouvrants 12A, 12B, 12C, ou suite à la réception d'un ordre de génération de nouvelle clef numérique. Ceci permet de réduire avantageusement l'espace mémoire nécessaire pour le stockage des clefs numériques dans la mémoire du composant électronique 56.

Il est à noter que les différents modes de génération de clefs numériques décrits ci-dessus ne sont pas exclusifs, ce qui permet un fonctionnement uniforme pour le contrôle de toutes les serrures électroniques, et ainsi simplifier la gestion des clefs, notamment au sein du serveur de stockage des données de l'opérateur du coffre 1. Comme dans les cas de génération des clefs numériques, soit suite à la détection de fermeture d'un ouvrant, soit suite à la réception d'un ordre de génération de clef numérique, les clefs générées sont transmises via les moyens d'émission 60 vers le serveur de stockage des données, ce dernier peut maintenir une base de données comprenant les clefs numérique en vigueur, autrement dit soit les clefs originales, enregistrées lors de la fabrication des coffres, soit des clefs générées qui auraient remplacé les clefs originales.

Dans le cas où les clefs numériques sont stockées dans la mémoire du composant électronique de reconnaissance 56, si elles ne sont pas régénérées et remplacées, une même clef peut être utilisée plusieurs fois pour la même serrure. Pour éviter une utilisation frauduleuse d'une clef, par exemple en cas de vol d'une clef numérique unique après son émission par le dispositif de communication 65 de l'utilisateur, ou par les moyens d'émission 60, les clefs seront transmises sous forme chiffrée, selon une technique connue par l'homme du métier sous le nom de « grain de sel ». Une information de temps (ou « timestamp » en anglais) est intégrée aux données chiffrées, en plus de la clef à transmettre. Grace à cette technique, si un utilisateur malveillant capture la clef et change l'information de temps, l'information chiffrée ne correspondra pas, et la clef capturée sera rejetée par le module de commande 36. La tentative de fraude ainsi détectée sera transmise par le module de commande 36 au serveur de données de l'opérateur du coffre.

Les moyens de génération 62 sont par exemple formés d'un module logiciel de génération de clefs numériques uniques.

Dans l'exemple de réalisation préférentiel selon lequel le composant électronique 56 comprend également une horloge électronique 70, une information d'horodatage est associée à la clef numérique unique générée et le composant électronique 56 n'est propre à authentifier une clef numérique CN reçue par comparaison avec la clef numérique générée que pendant une durée prédéterminée. Ceci permet, en cas de vol d'une clef numérique unique après son émission par le module de commande 36, de réduire la durée d'une fenêtre temporelle « fictive » durant laquelle l'accès à l'espace intérieur d'un ou plusieurs compartiment(s) peut être compromis. Un gain de sécurité supplémentaire est ainsi obtenu.

Le composant 64 de codage de données est connecté d'une part entre le capteur 54 et le composant électronique 56, et d'autre part entre les moyens 62 de génération de clefs numériques et les moyens 60 d'émission de signaux. Le composant de codage 64 est propre à coder les clefs numériques uniques générées par les moyens de génération 62.

Le composant de codage 64 est propre en outre à décoder une clef numérique codée CNC contenue dans le signal 66 et à transmettre la clef numérique décodée CN au composant électronique 56.

De préférence, le composant de codage 64 est propre également à transmettre les clefs numériques codées aux moyens d'émission 60, après réception par le composant électronique 56 d'un signal de confirmation de verrouillage d'au moins un des ouvrants 12A, 12B, 12C, suivie d'une génération de nouvelles clefs numériques par les moyens 62 de génération de clefs numériques. En variante, le composant de codage 64 est propre à transmettre aux moyens d'émission 60 les clefs numériques codées CNC correspondant aux nouvelles clefs numériques CN générées selon une des variantes de génération décrites précédemment. Dans les deux cas le signal 82 comporte les clefs numériques codées CNC, pour transmission au serveur de stockage de données.

Chaque liaison de données 38A, 38B, 38C peut être une liaison bidirectionnelle filaire ou non filaire. Dans le mode de réalisation de l'invention des figures 1 et 2, chaque liaison de données 38A, 38B, 38C est par exemple une liaison radioélectrique bidirectionnelle. En variante la liaison de données 38A, 38B, 38C est une liaison point à multipoint bidirectionnelle. Encore en variante, la liaison de données 38A, 38B, 38C peut être monodirectionnelle, permettant une transmission par le module de commande 36 des signaux de consigne d'activation ou désactivation des moyens moteurs 40, pour le verrouillage ou le déverrouillage des ouvrants 12A, 12B, 12C.

Dans certains modes de réalisation, selon lequel les séparateurs de compartiments sont escamotables, le capteur 54 ou les moyens de réception 61 sont propres en outre à recevoir un signal 68 de commande de déplacement d'au moins un de ces séparateurs escamotables 16A, 16B. Le capteur 54 ou les moyens de réception 61 sont aptes à transmettre ce signal de commande 68 à l'unité 71 de pilotage des moyens moteurs 18 des séparateurs. L'unité 71 de pilotage des moyens moteurs 18 est propre, suite à la réception du signal 68 de commande de déplacement, à transmettre aux moyens moteurs 18 associés un signal 84 de commande pour l'escamotage ou la remise en place de ce séparateur.

Dans certains modes de réalisation, le coffre 1 comporte en outre au moins un détecteur 15A, 15B apte à détecter si ledit au moins un séparateur de compartiments 16A, 16B se trouve dans la première ou dans la deuxième position, ledit au moins un détecteur étant connecté par une connexion 17A, 17B, au module de commande 36, et apte à lui transmettre, par l'intermédiaire de cette connexion 17A, 17B, des informations représentatives du positionnement dudit au moins un séparateur de compartiments 16A, 16B. Le module de commande 36 est apte à transmettre ces informations au dispositif de communication 65, 65' par l'intermédiaire du capteur 54, utilisant par exemple une technologie BLE, et/ou au serveur de stockage de données, par l'intermédiaire des moyens d'émission 61.dispositif de communication 65.

Un utilisateur d'un coffre tel que précédemment décrit est muni d'un dispositif de communication 65, 65' apte à émettre, sur une liaison sans fil 85, le signal 66 comprenant une clef numérique codée CNC ou non codée CN.

Dans certains modes de réalisation, le dispositif de communication 65 de l'utilisateur est muni d'une interface de saisie IHM, par exemple un écran tactile, permettant une saisie manuelle des informations représentatives du positionnement des séparateurs de compartiments 16, 16A, 16B; le dispositif de communication peut être muni également de moyens de capture permettant l'acquisition de telles informations.

Le dispositif de communication 65, 65' est apte à transmettre ces informations au module de commande 36 et/ou au serveur de stockage de données. Cette configuration est particulièrement utile dans le cas d'un coffre dans lequel au moins un séparateur de compartiments 16, 16A, 16B peut être positionné manuellement par l'utilisateur du dispositif de communication 65, 65'.

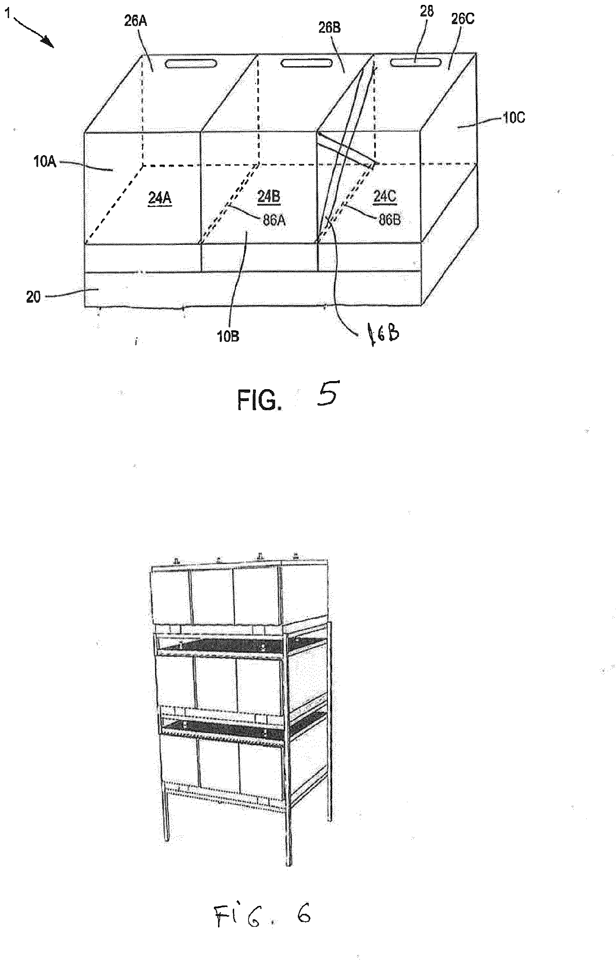

Un premier mode de fonctionnement du coffre 1 dans un mode de réalisation particulier va maintenant être décrit en référence à la figure 5.

Dans un coffre 1 mettant en œuvre ce premier mode de fonctionnement, chaque séparateur de compartiments est un séparateur escamotable 16A, 16B, mobile entre une première position non-escamotée, et une deuxième position escamotée, comme expliqué précédemment. Le coffre 1 dispose de moyens moteurs 18A, 18B, reliés au séparateurs 16A, 16B, et aptes à positionner ces séparateurs dans la première position ou dans la deuxième position, ainsi que d'une unité 71 de pilotage des moyens moteurs 18.

On suppose que la configuration initiale du coffre 1 est celle représentée en figure 5, à savoir avec le séparateur 16B dans la première position non escamotée, et avec le séparateur 16A (non représenté sur cette figure) dans la deuxième position, escamoté, de sorte à réunir les espaces intérieurs 24A, 24B définis par les compartiments 10A et 10B.

Cette configuration est obtenue dans une étape préliminaire, durant laquelle un utilisateur « distributeur » envoie depuis un dispositif de communication 65 externe un signal 68 comprenant un ordre de positionnement du séparateur 16A dans la deuxième position, c'est-à-dire en position escamotée et du séparateur 16B dans la première position, c'est-à-dire en position non-escamotée. Ce signal 68 de commande est reçu par le module de commande 36 via le capteur 54.

En variante, le module de commande 36 peut recevoir un tel ordre de positionnement des séparateurs de compartiments par l'intermédiaire des moyens de réception 61, via le réseau privé de l'opérateur du coffre 1, par exemple depuis le serveur de stockage de données de l'opérateur.

Ce signal de commande 68 correspond à un ordre de mutualisation des premier et deuxième compartiments 10A, 10B. Le capteur 54 transmet alors ce signal de commande 68 à l'unité 71 de pilotage des moyens moteurs 18 des séparateurs.

Le procédé comprend ensuite une étape d'émission d'un signal 84 de commande d'escamotage du premier séparateur 16A, à destination des moyens moteurs 18 reliés au premier séparateur 16A. Le signal 84 de commande d'escamotage est émis par l'unité de pilotage 71. Le premier séparateur 16A est alors déplacé de sa position non-escamotée vers sa position escamotée par les moyens moteurs 18 associés.

Le module de commande 36 comporte aussi des moyens 55 de mémorisation des signaux 84 de commande envoyés, qui lui permettrons par la suite de déterminer les positions respectives des séparateurs de compartiments 16A et 16B.

Ensuite on suppose que l'utilisateur « distributeur » place, au sein de l'espace formé par la réunion des espaces intérieurs 24A et 24B, un objet à distribuer destiné à l'utilisateur d'un dispositif de communication 65', appelé ci-après « destinataire ». Plus précisément, l'utilisateur « distributeur » place l'objet à distribuer dans les premier et deuxième compartiments 10A, 10B , puis ferme les premier et deuxième ouvrants 12A, 12B associés.

L'objet à distribuer est par exemple un colis. Les moyens de détection 42 agencés au sein des serrures électroniques 34A, 34B correspondantes détectent la fermeture des ouvrants 12A, 12B, et émettent un signal de détection de la fermeture de ces ouvrants sur les liaisons de données 38A, 38B associées.

Au cours d'une étape suivante, le composant électronique de reconnaissance 56 reçoit des signaux de détection de fermeture des ouvrants 12A et 12B. Optionnellement, le procédé reboucle sur cette étape tant que le composant électronique de reconnaissance 56 n'a pas reçu tous les signaux de fermeture associés à l'ensemble des ouvrants qui forment accès aux compartiments agencés de part et d'autre du ou des séparateur(s) escamoté(s).

Après réception de tous les signaux de fermeture attendus, le composant électronique 56 génère des signaux de consigne d'activation des moyens moteurs 40 pour le verrouillage des ouvrants 12A et 12B, et émet ces signaux sur les liaisons de données 38A, 38B associées. Après réception par les serrures électroniques 34A, 34B du signal de consigne de d'activation des moyens moteurs, les moyens moteurs 40 verrouillent les ouvrants 12A, 12B.

Au cours d'une étape suivante, les moyens de génération 62 génèrent une clef numérique unique CN_A, CN_B pour chaque serrure électronique 34B, 34 C. Les moyens de génération 62 transmettent ces clefs numériques CN_A, CN_B, au composant électronique de reconnaissance 56 et au composant de codage 64. Alternativement, une seule clef numérique CN_AB est générée pour les deux serrures électroniques 34A, 34 B. Cette clef numérique CN_AB commune aux deux serrures électroniques 34A, 34 B, est transmise ensuite par les moyens de génération 62 au composant électronique de reconnaissance 56 et au composant de codage 64.

Au cours d'une étape suivante, le composant électronique 56 stocke les clefs numériques CN_A, CN_B, CN_AB dans sa mémoire. De préférence, au cours de cette même étape, le composant de codage 64 code ces clefs numériques et obtient ainsi des clefs numériques codées CNC_A, CNC_B, CNC_AB.

De préférence, au cours d'une étape suivante, l'utilisateur « distributeur » transmet au capteur 54, par exemple via son dispositif de communication 65, un signal de confirmation de verrouillage des ouvrants 12A et 12B. Suite à la réception du signal de confirmation par le composant électronique 56 via le capteur 54, le composant électronique 56 transmet au composant de codage 64 un signal de consigne de transmission des clefs numériques codées CNC_A, CNC_B, CNC_AB, aux moyens d'émission 60. A l'issue de cette étape, le composant de codage 64 transmet les clefs numériques codées aux moyens d'émission 60 du module de commande 36. Les moyens d'émission 60 émettent alors le signal 82 comportant les clefs numériques codées CNC_A, CNC_B, CNC_AB, sur une liaison de données 88, par exemple à destination d'un serveur de stockage de données de l'opérateur.

Optionnellement, le signal 82 peut comporter aussi des informations représentatives des positions des séparateurs de compartiments 16A et 16B. Pour rappel, ces informations peuvent être obtenues par le module de commande 36 grâce aux moyens 55 de mémorisation des signaux 84 A, 84B, préalablement envoyés vers les moyens moteurs 18 associés aux séparateurs.

On suppose pour la suite qu'un utilisateur « destinataire » se déplace jusqu'à au coffre 1 pour récupérer l'objet à distribuer ; et que cet utilisateur est averti de la disponibilité du colis, par exemple via une notification sur son dispositif de communication 65'. On suppose en outre que l'utilisateur « destinataire » reçoit, sur son dispositif de communication 65', la ou les clef(s) numérique(s) codée CNC_A, CNC_B, CNC_AB, depuis le serveur de stockage de données de l'opérateur du coffre 1. On suppose enfin que l'utilisateur « destinataire » se rend à proximité du coffre 1, puis qu'il saisit, via une interface homme-machine de ce dispositif de communication 65', une instruction d'envoi de la ou les clef(s) numérique(s) codée(s) CNC_A, CNC_B, CNC_AB par son dispositif de communication 65', au module de commande 36. Le dispositif de communication 65' émet alors le signal 66 contenant la ou les clef(s) numérique(s) codée CNC_A, CNC_B, CNC_AB sur la liaison sans fil 85, à destination du module de commande 36.

Au cours d'une étape suivante, le capteur 54 reçoit le signal 66 contenant la clef numérique codée CNC, CNC_A, CNC_B, CNC_AB. Le capteur 54 transmet alors la ou les clefs numériques codées CNC_A, CNC_B, CNC_AB au composant de codage 64. Ensuite, le composant de codage 64 décode la ou les clef(s) numérique(s) codées CNC, CNC_A, CNC_B, CNC_AB, puis transmet la ou les clef(s) numérique(s) obtenue(s) CN, CN_A, CN_B, CN_AB au composant électronique de reconnaissance 56.

Au cours d'une étape suivante, le composant électronique de reconnaissance 56 authentifie la ou les clef(s) numérique(s) CN, CN_A, CN_B, CN_AB reçue(s) par comparaison avec les clefs numériques préalablement stockées au sein de sa mémoire. Ensuite, le composant le composant électronique de reconnaissance 56 identifie la ou les serrure(s) électronique(s) correspondant à la ou aux clefs authentifiées, ainsi que les ouvrants associés à ces serrures, puis les compartiments auxquels ces ouvrants donnent accès, et enfin les séparateurs susceptibles de définir, en position non escamotée, les espaces intérieurs propres à ces compartiments.

Le module de commande 36 détermine ensuite, grâce aux moyens de mémorisation des ordres de positionnement des séparateurs de compartiments préalablement envoyés, si parmi les séparateurs identifiés il y a des séparateurs en position escamotée, dans cet exemple le séparateur 16A. Le module de commande 36 génère ensuite un signal de consigne de désactivation à destination des moyens moteurs 40 des serrures électroniques 34A et 34B, associées aux ouvrants 12A, 12B qui forment accès à l'espace formé par la réunion des compartiments 10A et 10B, agencés d'une part et d'autre du séparateur 16A se trouvant en position escamotée.

Selon les modes de réalisation, le composant électronique de reconnaissance 56 génère le signal de consigne si au moins une des clefs numériques reçues correspond à une des clefs numériques stockées et associées aux serrures électroniques 34A et 34B, ou si toutes les clefs numériques reçues correspondent à des clefs numériques stockées associées aux serrures électroniques 34A et 34B.

Le composant électronique de reconnaissance 56 émet ensuite ce signal de consigne de désactivation sur les liaisons de données 38A, 38B correspondantes. Après réception par les serrures électroniques 34A, 34B du signal de consigne de désactivation des moyens moteurs, les moyens moteurs 40 déverrouillent les ouvrants 12A, 12B, libérant ainsi l'accès à l'espace formé par la réunion des espaces intérieurs 24A, 24B des compartiments 10A et 10B. Les signaux de consigne de désactivation des moyens moteurs 40 des serrures électroniques 34A et 34B sont envoyés de manière coordonnée, simultanément ou quasi-simultanément, pour un déverrouillage de ces serrures qui sera perçu par l'utilisateur « destinataire » comme simultané.

A l'issue de cette étape, l'utilisateur « destinataire » peut ouvrir les ouvrants 12A et 12B, puis récupérer l'objet à l'intérieur des compartiments réunis 10A, 10B.

Un deuxième mode de fonctionnement du coffre 1 sera maintenant décrit, en référence à la même figure 5. Ce deuxième mode de fonctionnement est similaire au premier mode de fonctionnement, à l'exception du mode de génération de clefs.

Dans ce mode de fonctionnement, lors de la fabrication des coffres, des clefs numériques associées à chaque serrure sont stockées dans la mémoire non-volatile du composant de reconnaissance 56. Le module de commande 36 comprend en outre des moyens 62 de génération de clefs numériques qui sont propres à générer une clef numérique unique suite à la réception par le module de commande 36 d'un ordre de génération de clefs numériques. Cet ordre peut être reçu via le capteur 54, par exemple dans le cas d'émission de l'ordre par un dispositif de communication 65 d'un agent autorisé de l'opérateur du coffre1. Les signaux utilisés peuvent être dans ce cas de signaux de type LTE, Bluetooth, BLE (Bluetooth Low Energie), ou NFC. L'ordre peut également être reçu par l'intermédiaire des moyens de réception 61 du module de commande.

Dans ce deuxième mode de fonctionnement, les clefs peuvent être générées une par une, par exemple lors de l'utilisation du coffre par un utilisateur client ou agent de l'opérateur. Plusieurs clefs peuvent être générées à la fois, par exemple suite à un message diffusé depuis le serveur de données vers tous les coffres gérés par ce serveur, ou vers un sous-ensemble de ces coffres.

Il est à noter que les deux modes de génération des clefs suite à la réception d'un ordre de génération de clef(s), une par une ou plusieurs à la fois, peuvent coexister sur un même coffre.

Dans ce deuxième mode de fonctionnement du coffre 1, les clefs stockées dans la mémoire du composant électronique de reconnaissance 56 ne sont pas régénérées et remplacées à chaque fermeture des ouvrants. Par conséquent, une même clef peut être utilisée plusieurs fois pour la même serrure. Comme déjà mentionné, des techniques connues de l'homme du métier, telle que la technique du « grain de sel » permettent d'éviter une utilisation frauduleuse d'une clef, par exemple en cas d'interception d'un signal portant une clef numérique.

Un troisième mode de fonctionnement du coffre 1 sera maintenant décrit, en référence à la même figure 5. Ce troisième mode de fonctionnement peut être similaire au premier ou au deuxième mode de fonctionnement, à l'exception du mode de positionnement des séparateurs de compartiments, et de la manière dont ce positionnement est déterminé par le module de commande 36.

Dans un coffre 1 mettant en œuvre ce troisième mode de fonctionnement, chaque séparateur de compartiments est un séparateur amovible 16A, 16B, pouvant être positionné manuellement par un utilisateur soit dans une première position, de sorte à séparer les espaces intérieurs respectifs 24A, 24B, 24C définis par les compartiments 10A, 10B, 10C, soit dans une deuxième position, de sorte à réunir les espaces intérieurs respectifs 24A, 24B, 24C définis par ces compartiments 10A, 10B, 10C.

Le coffre 1 comporte en outre au moins un détecteur 15A, 15B apte à détecter si ledit au moins un séparateur de compartiments 16A, 16B se trouve dans la première ou dans la deuxième position, ledit au moins un détecteur étant connecté par une connexion 17A, 17B au module de commande 36, et apte à lui transmettre, par l'intermédiaire de cette connexion 17A, 17B, des informations représentatives du positionnement dudit au moins un séparateur de compartiments 16A, 16B.

La connexion 17A, 17B peut être simplement être constituée par conducteur électrique apte à transmettre un signal électrique, par exemple la tension sur une sortie dédiée du capteur 15A, 15B, à une entrée dédiée 19A, 19B, du module de commande 36, le signal électrique pouvant prendre deux valeurs distinctes, par exemple 0 V ou 3,3V, ou plus généralement une tension positive représentative de la valeur logique « 1 ». Chaque valeur correspond à une position du séparateur de compartiments. Le module de commande 36 peut, grâce à cette information reçue sur l'entrée dédiée 19A, 19B, déterminer si l'au moins un séparateur de compartiments 16A, 16B est positionné dans la première ou dans la deuxième position.

Ce mode de réalisation présente l'avantage de fournir une solution automatisée et sécurisée pour la gestion des clefs numériques et de l'ouverture des compartiments du coffre, même en cas de positionnement manuel des séparateurs.

Il est à noter que la détermination des positions des séparateurs selon ce mode de réalisation peut être aussi utilisée lors d'un positionnement motorisé des séparateurs, ce qui simplifie le procédé de détermination.

En variante, la connexion 17A, 17B peut être une connexion de données, filaire ou par radiofréquences. Dans ce cas, le module de commande 36 peut déterminer la position des séparateurs de compartiments grâce à un récepteur des données émises par les détecteurs de position 15A, 15B.

Dans les deux cas, l'utilisation du résultat de la détermination des positions des séparateurs de compartiments est similaire à celle du premier mode de fonctionnement. Le module de commande 36 détermine, grâce aux informations reçues par l'intermédiaire de la connexion 17, si parmi les séparateurs identifiés il y des séparateurs positionnés dans la deuxième position, dans cet exemple, le séparateur 16A. Ensuite le module de commande 36 génère un signal de consigne de désactivation à destination des moyens moteurs 40 des serrures électroniques 34A et 34B, associées aux ouvrants 12A, 12B qui forment accès à l'espace formé par la réunion des compartiments 10A et 10B, agencés d'une part et d'autre du séparateur 16A se trouvant dans la deuxième position.

Un quatrième mode de fonctionnement du coffre 1 sera maintenant décrit, en référence à la même figure 5. Ce quatrième mode de fonctionnement est similaire aux premier et au deuxième modes de fonctionnement précédemment décrits, à l'exception du mode de positionnement des séparateurs de compartiments, et de la manière dont les positions de séparateurs sont déterminées par le module de commande 36.

Dans un coffre 1 mettant en œuvre ce quatrième mode de fonctionnement, chaque séparateur de compartiments est un séparateur amovible 16A, 16B, pouvant être positionné manuellement par un utilisateur, soit dans une première position, de sorte à séparer les espaces intérieurs respectifs 24A, 24B, 24C définis par les compartiments 10A, 10B, 10C, soit dans une deuxième position, de sorte à réunir les espaces intérieurs respectifs 24A, 24B, 24C définis par ces compartiments 10A, 10B, 10C.

Pour la mise en œuvre de ce quatrième mode de fonctionnement, l'utilisateur « distributeur » qui positionne les séparateurs de compartiments utilise un dispositif de communication 65, 65', muni d'une interface de saisie IHM, par exemple un écran tactile, permettant une saisie manuelle des informations représentatives du positionnement des séparateurs de compartiments 16A, 16B, ou de moyens de capture permettant l'acquisition de telles informations. Ce dispositif de communication 65, 65' est aussi apte à transmettre ces informations au module de commande 36 par l'intermédiaire du capteur de signaux 54 et/ou au serveur de stockage de données, via un réseau de télécommunications.

Le module de commande 36 peut ainsi, grâce au capteur 54, recevoir des informations relatives au positionnement des séparateurs de compartiments, si ces informations sont transmises par le dispositif de communication 65 directement. Alternativement, si lors du positionnement des séparateurs, les informations relatives à leurs positions sont transmises par le dispositif de communication 65 au serveur de données de l'opérateur du coffre, le module de commande 36 peut recevoir ultérieurement ces informations, depuis le serveur de données, par exemple via les moyens de réception 61.

On conçoit ainsi que le procédé de verrouillage ou déverrouillage simultané (du point de vue de l'utilisateur) d'au moins deux ouvrants d'un coffre selon l'invention permet de mutualiser au moins deux compartiments du coffre, de sorte à obtenir un compartiment de taille plus grande, tout en facilitant l'accès à l'intérieur du compartiment en résultant, via l'ouverture simultanée de tous les ouvrants qui forment accès à ce compartiment, et en permettant d'assurer une gestion simple et fiable des clefs numériques générées.

Les exemples de fonctionnement exposés illustrent des cas d'utilisation dans lesquels l'objet reçu dans l'espace formé par les compartiments réunis est déposé par un utilisateur du coffre « distributeur », par exemple un agent de l'opérateur du coffre 1, et ensuite récupéré par un utilisateur « destinataire », client de l'opérateur. L'utilisateur « destinataire » obtient le déverrouillage des serrures concernées après avoir envoyé, via son dispositif de communications 65' la ou les clefs associées à ces serrures.

Il est important de noter que le coffre et le procédé de verrouillage /déverrouillage selon l'invention peuvent être utilisés dans des cas d'utilisation dans lesquels l'objet est déposé par un utilisateur « expéditeur », client de l'opérateur du coffre1, et ensuite collecté par un utilisateur agent de l'opérateur en vue d'une distribution ultérieure. Dans ce cas, l'utilisateur « expéditeur » peut déposer l'objet dans un coffre configuré selon la taille de cet objet, et obtenir le verrouillage des serrures concernées, pour sécuriser son envoi, après avoir transmis, via son dispositif de communications 65 la ou les clefs associées à ces serrures.

Un ou plusieurs coffres selon l'invention peuvent être fixés sur un meuble, par exemple un meuble dit « urbain », installé dans la rue ou dans un bâtiment. Un tel meuble est illustré en figure 6.

Un ou plusieurs coffres selon l'invention peuvent être installés sur un véhicule avec ou sans pilote, apte à se déplacer sur terre, sur eau ou dans l'air. L'invention s'applique par exemple de la même manière à un drone.

Les coffres peuvent être remplis à l'avance et placés sur le véhicule ou sur le meuble au moment de la distribution. Les coffres modulaires selon l'invention sont interchangeables, et la livraison se trouve ainsi accélérée. Plusieurs coffres selon l'invention peuvent être empilés, pour obtenir un agencement optimisé sur un véhicule ou dans un meuble.

Les coffres ainsi empilés peuvent être solidarisés en utilisant une serrure électronique du même type que les serrures électroniques décrites précédemment. Toutefois, le verrouillage et déverrouillage des serrures qui solidarisent des coffres selon l'invention sera protégé par des clefs numériques dédiées, réservées à l'usage des agents de l'opérateur de ces coffres.

L'invention est décrite dans ce qui précède à titre d'exemple. Il est entendu que l'homme du métier est à même de réaliser différentes variantes de réalisation de l'invention sans pour autant sortir du cadre de l'invention défini par les revendications.

## Revendications

1. Coffre (1) comprenant :
- au moins deux compartiments (10A, 10B, 10C) définissant chacun un espace intérieur (24A, 24B, 24C) de réception d'un objet ;
- au moins un séparateur de compartiments (16, 16A, 16B) agencé entre deux compartiments (10A, 10B, 10C) et pouvant être positionné
- dans une première position, de sorte à séparer les espaces intérieurs respectifs (24A, 24B, 24C) définis par ces compartiments (10A, 10B, 10C), ou
- dans une deuxième position, de sorte à réunir les espaces intérieurs respectifs (24A, 24B, 24C) définis par ces compartiments (10A, 10B, 10C) ;
- au moins deux ouvrants (12, 12A, 12B, 12C), chaque ouvrant formant accès à un compartiment (10A, 10B, 10C) distinct depuis l'extérieur du coffre (1), chaque ouvrant comprenant une serrure électronique (34, 34A, 34B, 34C) et étant apte à fermer un desdits espaces intérieurs (24A, 24B, 24C) ; et
- un module de commande (36) relié aux serrures électroniques (34, 34A, 34B, 34C) via une liaison de données (38, 38A, 38B, 38C), les serrures électroniques (34, 34A, 34B, 34C) comprenant des moyens moteurs (40) aptes à verrouiller et déverrouiller l'ouvrant suivant la valeur d'une consigne reçue par les serrures électroniques (34, 34A, 34B, 34C) via la première liaison de données, le module de commande (36) comprenant
- des moyens de réception (54,61) d'un signal (66) comprenant au moins une clef numérique, dite clef numérique reçue ; et
- un composant électronique de reconnaissance (56) permettant d'authentifier ladite au moins une clef numérique reçue, **caractérisé en ce que**
les moyens de réception (54, 61) sont propre à transmettre le signal (66) au composant électronique de reconnaissance (56), l'authentification de ladite au moins une clef numérique reçue par le composant électronique de reconnaissance (56) déclenchant la génération d'un signal de consigne (67) pour le verrouillage ou le déverrouillage de l'ouvrant, **en ce que**
- le module de commande (36) comprend en outre des moyens de détermination (55) si l'au moins un séparateur de compartiments (16, 16A, 16B) est positionné dans la première ou dans la deuxième position, et des moyens de transmission du résultat de cette détermination au composant électronique de reconnaissance (56) et **en ce que**
- le composant électronique de reconnaissance (56) est apte, lorsqu'il est déterminé que ledit au moins un séparateur de compartiments (16, 16A, 16B) est positionné dans la deuxième position, à transmettre, suite à l'authentification de ladite au moins une clef numérique reçue, ledit signal de consigne (67) à destination de toutes les serrures électroniques associées aux ouvrants (12, 12A, 12B, 12C) qui forment accès aux compartiments (10A, 10B, 10C) agencés de part et d'autre dudit au moins un séparateur de compartiments (16, 16A, 16B), pour le verrouillage ou le déverrouillage desdits ouvrants (12, 12A, 12B, 12C).

2. Coffre (1) selon la revendication 1 comprenant en outre des moyens moteurs (18) aptes à positionner ledit au moins un séparateur de compartiments (16, 16A, 16B) dans la première ou dans la deuxième position, suivant la valeur d'au moins un signal de commande (68) reçu, le module de commande (36) apte à recevoir un ordre de positionnement de l'au moins un séparateur de compartiments (16, 16A, 16B), le module de commande (36) étant propre à générer ledit au moins un signal de commande (84) en fonction de l'ordre de positionnement reçu et à transmettre aux moyens moteurs (18) ledit au moins un signal de commande (84) pour le positionnement dudit au moins un séparateur de compartiments (16, 16A, 16B) dans la première ou dans la deuxième position.

3. Coffre (1) selon une quelconque des revendications précédentes, comprenant en outre au moins un détecteur (15A, 15B) apte à détecter si ledit au moins un séparateur de compartiments (16, 16A, 16B) se trouve dans la première ou dans la deuxième position, ledit au moins un détecteur (15, 15A, 15B) étant connecté par une connexion (17A, 17B) au module de commande (36), et apte à transmettre au module de commande (36) des informations représentatives du positionnement dudit au moins un séparateur de compartiments (16, 16A, 16B).

4. Coffre (1) selon une quelconque des revendications précédentes, dans lequel ledit au moins un séparateur de compartiments (16,16A,16B) peut être positionné manuellement par un utilisateur muni d'un dispositif de communication (65) permettant une saisie manuelle des informations représentatives du positionnement dudit au moins un séparateur de compartiments (16, 16A, 16B), le dispositif de communication (65) étant apte à transmettre ces informations au module de commande (36).

5. Coffre (1) selon une quelconque des revendications précédentes, **caractérisé en ce que**
- les serrures électroniques comprennent des moyens (42) de détection d'une fermeture de l'ouvrant et des moyens d'émission (48) d'un signal de détection de fermeture sur la liaison de données (38, 38A, 38B, 38C), et **en ce que** le module de commande (36) comprend en outre
- des moyens de génération (62) de clefs numériques propres à générer une clef numérique unique suite à la détection de fermeture de l'ouvrant,
- des moyens de transmission de la clef numérique unique générée au composant électronique de reconnaissance (56), le composant électronique (56) étant propre à authentifier la clef numérique reçue par comparaison avec la clef numérique générée ;
- des moyens (60) d'émission d'un signal (82) comportant la clef numérique unique générée.

6. Coffre selon la revendication précédente, dans lequel les moyens de génération (62) de clefs numériques sont aptes, lorsque ledit au moins un séparateur de compartiments (16, 16A, 16B) est positionné dans la deuxième position, à générer une clef numérique unique pour toutes les serrures électroniques associées aux ouvrants (12, 12A,12B, 12C) qui forment accès aux compartiments (10A, 10B, 10C) agencés de part et d'autre dudit au moins un séparateur de compartiments (16, 16A, 16B), la clef numérique unique étant générée seulement lorsque la fermeture de tous les ouvrants (12, 12A,12B, 12C) qui forment accès aux compartiments (10A, 10B, 10C) agencés de part et d'autre dudit au moins un séparateur de compartiments (16, 16A, 16B) est détectée.

7. Coffre (1) selon une quelconque des revendications précédentes, comprenant en outre
- un module de stockage des clefs numériques, au moins une clef numérique étant associée à chaque serrure électronique (34, 34A, 34B, 34C), et
- des moyens de transmission de ladite au moins une clef numérique unique stockée au composant électronique de reconnaissance (56), le composant électronique (56) étant propre à authentifier ladite au moins une clef numérique reçue par comparaison avec ladite au moins une clef numérique stockée.

8. Coffre (1) selon une quelconque des revendications, **caractérisé en ce qu'**une information d'horodatage est associée à la clef numérique unique, et **en ce que** le composant électronique (56) n'est propre à authentifier la clef numérique reçue par comparaison avec la clef numérique unique générée que pendant une durée prédéterminée.

9. Véhicule (V) comprenant un coffre (1) selon une quelconque des revendications 1 à 8.

10. Meuble (M) comprenant un coffre (1) selon l'une quelconque des revendications 1 à 8.

11. Procédé de verrouillage et déverrouillage d'au moins deux ouvrants (12A, 12B, 12C) d'un coffre (1) selon la revendication 1, le procédé comprenant :
- une étape de réception (E10) par les moyens de réception (54, 61) du module de commande (36) d'un signal (66) comprenant au moins une clef numérique, dite une clef numérique reçue ;
- une étape d'authentification (E20) de ladite au moins une clef numérique reçue par le composant électronique de reconnaissance (56) ;
- une étape de détermination (E30), par le module de commande (36), si l'au moins un séparateur de compartiments (16, 16A, 16B) est positionné dans la première ou dans la deuxième position,
- une étape de transmission (E40), par le module de commande (36), du résultat de cette détermination au composant électronique de reconnaissance (56) et, lorsqu'il est déterminé que ledit au moins un séparateur de compartiments (16, 16A, 16B) est positionné dans la deuxième position,
- une étape de génération (E50) par le composant électronique de reconnaissance (56), suite à l'authentification de ladite au moins une clef numérique reçue, d'un signal de consigne (67) à destination de toutes les serrures électroniques associées aux ouvrants (12, 12A, 12B, 12C), qui forment accès aux compartiments (10A, 10B, 10C) agencés de part et d'autre dudit au moins un séparateur de compartiments (16, 16A, 16B), pour le verrouillage ou le déverrouillage desdits ouvrants (12, 12A, 12B, 12C).

## Patentansprüche

1. Kasten (1), umfassend:
- wenigstens zwei Fächer (10A, 10B, 10C), die jedes einen inneren Raum (24A, 24B, 24C) zur Aufnahme eines Gegenstandes definieren;
- wenigstens einen Fächertrenner (16, 16A, 16B), der angeordnet zwischen zwei Fächern (10A, 10B, 10C) ist und der positioniert sein kann
-- in einer ersten Position, um die jeweiligen von diesen Fächern (10A, 10B, 10C) definierten inneren Räume (24A, 24B, 24C) zu trennen, oder
-- in einer zweiten Position, um die jeweiligen von diesen Fächern (10A, 10B, 10C) definierten inneren Räume (24A, 24B, 24C) zu vereinen;
- wenigstens zwei Öffnungen (12, 12A, 12B, 12C), wobei jede Öffnung Zugang zu einem separaten Fach (10A, 10B, 10C) von außerhalb des Kastens (1) bildet, wobei jede Öffnung ein elektronisches Schloss (34, 34A, 34B, 34C) umfasst und dafür geeignet ist, einen der inneren Räume (24A, 24B, 24C) zu schließen; und
- ein Steuerungsmodul (36), das über eine Datenverbindung (38, 38A, 38B, 38C) mit den elektronischen Schlössern (34, 34A, 34B, 34C) verbunden ist, wobei die elektronischen Schlösser (34, 34A, 34B, 34C) Antriebsmittel (40) umfassen, die dafür geeignet sind, die Öffnung dem Wert eines von den elektronischen Schlössern (34, 34A, 34B, 34C) über die erste Datenverbindung empfangenen Befehl folgend zu verriegeln und zu entriegeln, wobei das Steuerungsmodul (36) umfasst
- Mittel zum Empfang (54, 61) eines Signals (66), das wenigstens einen digitalen Schlüssel umfasst, einen sogenannten empfangenen digitalen Schlüssel; und
- eine elektronische Erkennungskomponente (56), die es ermöglicht, den wenigstens einen empfangenen digitalen Schlüssel zu authentifizieren,
**dadurch gekennzeichnet, dass**
die Mittel zur Aufnahme (54, 61) dafür ausgelegt sind, das Signal (66) an die elektronische Erkennungskomponente (56) zu übertragen, wobei die Authentifizierung des wenigstens einen von der elektronischen Erkennungskomponente (56) empfangenen digitalen Schlüssels die Generierung eines Befehlssignals (67) zum Verriegeln oder Entriegeln der Öffnung auslöst,
dadurch, dass
- das Steuerungsmodul (36) weiter Mittel zur Bestimmung (55), ob der wenigstens eine Fächertrenner (16, 16A, 16B) in der ersten oder in der zweiten Position positioniert ist, und Mittel zur Übertragung des Ergebnisses dieser Bestimmung an die elektronische Erkennungskomponente (56) umfasst, und dadurch, dass
- die elektronische Erkennungskomponente (56) dafür geeignet ist, wenn bestimmt ist, dass der wenigstens eine Fächertrenner (16, 16A, 16B) in der zweiten Position positioniert ist, infolge der Authentifizierung des wenigstens einen empfangenen digitalen Schlüssels das Befehlssignal (67) an alle elektronischen Schlösser zu übertragen, die mit den Öffnungen (12, 12A, 12B, 12C) assoziiert sind, die Zugang zu den beidseitig des wenigstens einen Fächertrenners (16, 16A, 16B) angeordneten Fächern (10A, 10B, 10C) bilden, zum Verriegeln oder Entriegeln der Öffnungen (12, 12A, 12B, 12C) .

2. Kasten (1) nach Anspruch 1, weiter umfassend Antriebsmittel (18), die geeignet sind, den wenigstens einen Fächertrenner (16, 16A, 16B) in der ersten oder in der zweiten Position zu positionieren, dem Wert des wenigstens einen empfangenen Steuerungssignals (68) folgend, wobei das Steuerungsmodul (36) geeignet ist, eine Positionierungsanordnung des wenigstens einen Fächertrenners (16, 16A, 16B) zu empfangen, wobei das Steuerungsmodul (36) dafür ausgelegt ist, das wenigstens eine Steuersignal (84) gemäß der empfangenen Positionierungsanordnung zu generieren und das wenigstens eine Steuersignal (84) zur Positionierung des wenigstens einen Fächertrenners (16, 16A, 16B) in der ersten oder in der zweiten Position an die Antriebsmittel (18) zu übertragen.

3. Kasten (1) nach einem der vorhergehenden Ansprüche, weiter umfassend wenigstens einen Detektor (15A, 15B), der geeignet ist, zu detektieren, ob sich der wenigstens eine Fächertrenner (16, 16A, 16B) in der ersten oder in der zweiten Position befindet, wobei der wenigstens eine Detektor (15, 15A, 15B) über eine Verbindung (17A, 17B) mit dem Steuerungsmodul (36) verbunden ist und geeignet ist, an das Steuerungsmodul (36) repräsentative Informationen über die Positionierung des wenigstens einen Fächertrenners (16, 16A, 16B) zu übertragen.

4. Kasten (1) nach einem der vorhergehenden Ansprüche, wobei der wenigstens eine Fächertrenner (16, 16A, 16B) von einem Benutzer manuell positioniert werden kann, der mit einer Kommunikationsvorrichtung (65) ausgestattetet ist, die eine manuelle Eingabe von repräsentativen Informationen der Positionierung des wenigstens eines Fächertrenners (16, 16A, 16B) ermöglicht, wobei die Kommunikationsvorrichtung (65) geeignet ist, diese Informationen an das Steuerungsmodul (36) zu übertragen.

5. Kasten (1) nach einem der vorhergehenden Ansprüche, **dadurch gekennzeichnet, dass**
- die elektronischen Schlösser Mittel (42) zur Detektion eines Schließens der Öffnung und Mittel zur Sendung (48) eines Signals der Detektion des Schließens über die Datenverbindung (38, 38Aa, 38B, 38C) umfassen, und dadurch, dass das Steuerungsmodul (36) weiter umfasst
- Mittel zur Generierung (62) digitaler Schlüssel, die dafür ausgelegt sind, infolge der Detektion des Schließens der Öffnung einen einmaligen digitalen Schlüssel zu generieren,
- Mittel zur Übertragung des generierten einmaligen digitalen Schlüssels an die elektronische Erkennungskomponente (56), wobei die elektronische Komponente (56) dafür ausgelegt ist, den empfangenen digitalen Schlüssel durch Vergleich mit dem generierten digitalen Schlüssel zu authentifizieren;
- Mittel (60) zum Senden eines Signals (82), das den generierten einmaligen digitalen Schlüssel enthält.

6. Kasten nach dem vorhergehenden Anspruch, wobei die Mittel zur Generierung (62) digitaler Schlüssel geeignet sind, wenn der wenigstens eine Fächertrenner (16, 16A, 16B) in der zweiten Position positioniert ist, für alle elektronischen Schlösser, die mit den Öffnungen (12, 12A, 12B, 12C) assoziiert sind, die Zugang zu den beidseitig des wenigstens einen Fächertrenners (16, 16A, 16B) angeordneten Fächern (10A, 10B, 10C) bilden, einen einmaligen digitalen Schlüssel zu generieren, wobei der digitale Schlüssel nur generiert wird, wenn das Schließen aller Öffnungen (12, 12A, 12B, 12C), die Zugang zu den beidseitig des wenigstens einen Fächertrenners (16, 16A, 16B) angeordneten Fächern (10A, 10B, 10C) bilden, detektiert wird.

7. Kasten (1) nach einem der vorhergehenden Ansprüche, weiter umfassend
- ein Modul zur Speicherung der digitalen Schlüssel, wobei wenigstens ein digitaler Schlüssel mit jedem elektronischen Schloss (34, 34A, 34B, 34C) assoziiert ist, und
- Mittel zur Übertragung des wenigstens einen gespeicherten einmaligen digitalen Schlüssels an die elektronische Erkennungskomponente (56), wobei die elektronische Komponente (56) dafür ausgelegt ist, den wenigstens einen empfangenen digitalen Schlüssel durch Vergleich mit dem wenigstens einen gespeicherten digitalen Schlüssel zu authentifizieren.

8. Kasten (1) nach einem der Ansprüche, **dadurch gekennzeichnet, dass** eine Zeitstempelungsinformation mit dem einmaligen digitalen Schlüssel assoziiert ist, und dadurch, dass die elektronische Komponente (56) nur während einer vorher festgelegten Dauer dafür ausgelegt ist, den empfangenen digitalen Schlüssel durch Vergleich mit dem generierten einmaligen digitalen Schlüssel zu identifizieren.

9. Fahrzeug (V), umfassend einen Kasten (1) nach einem der Ansprüche 1 bis 8.

10. Möbelstück (M), umfassend einen Kasten (1) nach einem der Ansprüche 1 bis 8.

11. Verfahren zum Verriegeln und Entriegeln von wenigstens zwei Öffnungen (12A, 12B, 12C) eines Kastens (1) nach Anspruch 1, wobei das Verfahren umfasst:
- einen Schritt des Empfangs (E10) durch die Mittel zum Empfang (54, 61) des Steuerungsmoduls (36) eines Signals (66), das wenigstens einen digitalen Schlüssel umfasst, einen sogenannten empfangenen digitalen Schlüssel;
- einen Schritt der Authentifizierung (E20) des wenigstens einen empfangenen digitalen Schlüssels durch die elektronische Erkennungskomponente (56);
- einen Schritt der Bestimmung (E30) durch das Steuerungsmodul (36), ob der wenigstens eine Fächertrenner (16, 16A, 16B) in der ersten oder in der zweiten Position positioniert ist,
- einen Schritt der Übertragung (E40) durch das Steuerungsmodul (36) des Ergebnisses dieser Bestimmung an die elektronische Erkennungskomponente (56) und, wenn bestimmt ist, dass der wenigstens eine Fächertrenner (16, 16A, 16B) in der zweiten Position positioniert ist,
- einen Schritt der Generierung (E50) durch die elektronische Erkennungskomponente (56), infolge der Authentifizierung des wenigstens einen empfangenen digitalen Schlüssels, eines Befehlssignals (67) an alle elektronischen Schlösser, die mit den Öffnungen (12, 12A, 12B, 12C) assoziiert sind, die Zugang zu den beidseitig des wenigstens einen Fächertrenners (16, 16A, 16B) angeordneten Fächern (10A, 10B, 10C) bilden, für das Verriegeln oder das Entriegeln der Öffnungen (12, 12A, 12B, 12).

## Claims

1. Box (1) comprising:
- at least two compartments (10A, 10B, 10C) each defining an internal space (24A, 24B, 24C) for receiving an object;
- at least one compartment separator (16, 16A, 16B) arranged between two compartments (10A, 10B, 10C) and able to be positioned
-- in a first position, so as to separate the respective internal spaces (24A, 24B, 24C) defined by these compartments (10A, 10B, 10C), or
-- in a second position, so as to join the respective internal spaces (24A, 24B, 24C) defined by these compartments (10A, 10B, 10C);
- at least two doors (12, 12A, 12B, 12C), each door forming access to a separate compartment (10A, 10B, 10C) from the outside of the box (1), each door comprising an electronic lock (34, 34A, 34B, 34C) and being able to close one of said internal spaces (24A, 24B, 24C); and
- a control module (36) connected to the electronic locks (34, 34A, 34B, 34C) via a data link (38, 38A, 38B, 38C), the electronic locks (34, 34A, 34B, 34C) comprising motor means (40) able to lock and unlock the door according to the value of an instruction received by the electronic locks (34, 34A, 34B, 34C) via the first data link, the control module (36) comprising
-- means (54, 61) for receiving a signal (66) comprising at least one digital key, referred to as the received digital key; and
-- an electronic recognition component (56) for authenticating said at least one received digital key,
**characterised in that**
the reception means (54, 61) are able to transmit the signal (66) to the electronic recognition component (56), the authentication of said at least one digital key received by the electronic recognition component (56) triggering the generation of an instruction signal (67) for the locking or unlocking of the door,
**in that**
- the control module (36) further comprises means (55) for determining whether the at least one compartment separator (16, 16A, 16B) is positioned in the first or second position, and means for transmitting the result of this determination to the electronic recognition component (56), and **in that**
- the electronic recognition component (56) is able, when it is determined that said at least one compartment separator (16, 16A, 16B) is positioned in the second position, to transmit, following the authentication of said at least one received digital key, said instruction signal (67) to all the electronic locks associated with the doors (12, 12A, 12B, 12C) that form access to the compartments (10A, 10B, 10C) arranged on either side of said at least one compartment separator (16, 16A, 16B), for the locking or unlocking of said doors (12, 12A, 12B, 12C) .

2. Box (1) according to claim 1, further comprising motor means (18) able to position said at least one compartment separator (16, 16A, 16B) in the first or second position, according to the value of at least one control signal (68) received, the control module (36) able to receive a positioning order from the at least one compartment separator (16, 16A, 16B), the control module (36) being able to generate said at least one control signal (84) according to the positioning order received and to transmit to the motor means (18) said at least one control signal (84) for the positioning of said at least one compartment separator (16, 16A, 16B) in the first or second position.

3. Box (1) according to either of the preceding claims, further comprising at least one detector (15A, 15B) able to detect whether said at least one compartment separator (16, 16A, 16B) is in the first or second position, said at least one detector (15, 15A, 15B) being connected by a connection (17A, 17B) to the control module (36), and able to transmit to the control module (36) information representing the positioning of said at least one compartment separator (16, 16A, 16B).

4. Box (1) according to any of the preceding claims, wherein said at least one compartment separator (16, 16A, 16B) can be positioned manually by a user provided with a communication device (65) allowing manual entry of the information representing the positioning of said at least one compartment separator (16, 16A, 16B), the communication device (65) being able to transmit this information to the control module (36).

5. Box (1) according to any of the preceding claims, **characterised in that**
- the electronic locks comprise means (42) for detecting a closure of the door and means (48) for sending a closure-detection signal over the data link (38, 38A, 38B, 38C), and **in that** the control module (36) further comprises
-- means (62) for generating digital keys able to generate a unique digital key following the detection of closure of the door,
-- means for transmitting the unique digital key generated to the electronic recognition component (56), the electronic component (56) being able to authenticate the digital key received by comparison with the digital key generated;
-- means (60) for sending a signal (82) comprising the unique digital key generated.

6. Box according to the preceding claim, wherein the means (62) for generating digital keys are able, when said at least one compartment separator (16, 16A, 16B) is positioned in the second position, to generate a unique digital key for all the electronic locks associated with the doors (12, 12A, 12B, 12C) that form access to the compartments (10A, 10B, 10C) arranged on either side of said at least one compartment separator (16, 16A, 16B), the unique digital key being generated only when the closure of all the doors (12, 12A, 12B, 12C) that form access to the compartments (10A, 10B, 10C) arranged on either side of said at least one compartment separator (16, 16A, 16B) is detected.

7. Box (1) according to any of the preceding claims, further comprising
- a module for storing the digital keys, at least one digital key being associated with each electronic lock (34, 34A, 34B, 34C), and
- means for transmitting said at least one unique digital key stored to the electronic recognition component (56), the electronic component (56) being able to authenticate said at least one digital key received by comparison with said at least one digital key stored.

8. Box (1) according to any of the claims, **characterised in that** timestamping information is associated with the unique digital key, and **in that** the electronic component (56) is able to authenticate the received digital key by comparison with the unique digital key generated only for a predetermined period.

9. Vehicle (V) comprising a box (1) according to any of claims 1 to 8.

10. Furniture (M) comprising a box (1) according to any of claims 1 to 8.

11. Method for locking and unlocking at least two doors (12A, 12B, 12C) of a box (1) according to claim 1, the method comprising:
- a step of reception (E10), by the reception means (54, 61) of the control module (36), of a signal (66) comprising at least one digital key, referred to as a received digital key;
- a step of authentication (E20) of said at least one digital key received by the electronic recognition component (56);
- a step of determination (E30), by the control module (36), whether the at least one compartment separator (16, 16A, 16B) is positioned in the first or second position,
- a step of transmission (E40), by the control module (36), of the result of this determination to the electronic recognition component (56) and, when it is determined that said at least one compartment separator (16, 16A, 16B) is positioned in the second position,
- a step of generation (E50), by the electronic recognition component (56), following the authentication of said at least one received digital key, of an instruction signal (67) intended for all the electronic locks associated with the doors (12, 12A, 12B, 12C) which form access to the compartments (10A, 10B, 10C) arranged on either side of said at least one compartment separator (16, 16A, 16B), for locking or unlocking said doors (12, 12A, 12B, 12C).
